Europäisches Patentamt

**European Patent Office**

Office européen des brevets

(11) Numéro de publication: **0 240 407**
**B1**

## FASCICULE DE BREVET EUROPEEN

(45) Date de publication du fascicule du brevet:
07.06.89

(21) Numéro de dépôt: **87400636.4**

(22) Date de dépôt: **23.03.87**

(51) Int. Cl.⁴: **B61D 17/20**, B62D 47/02,
B60D 5/00

(54) Dispositif destiné à assurer la continuité de passage entre deux véhicules successifs ferroviaires ou routiers.

(30) Priorité: **28.03.86 FR 8604676**
**03.03.87 FR 8702971**

(43) Date de publication de la demande:
**07.10.87 Bulletin 87/41**

(45) Mention de la délivrance du brevet:
**07.06.89 Bulletin 89/23**

(84) Etats contractants désignés:
**AT BE CH DE ES FR GB IT LI LU NL**

(56) Documents cités:
**EP-A- 0 067 944**
**DE-A- 1 580 974**
**DE-A- 2 817 739**
**DE-C- 966 430**
**GB-A- 1 228 200**

(73) Titulaire: **CAOUTCHOUC MANUFACTURE ET**
**PLASTIQUES, 143bis, rue Yves le Coz,**
**F-78005 Versailles(FR)**

(72) Inventeur: **Bechu, Jean-Pierre Les Poissons, 20ter rue**
**de Bezons, F-92400 Courbevoie(FR)**
Inventeur: **Wanneroy, Roland, 66 Bld Auguste Blanqui,**
**F-75013 Paris(FR)**

ACTORUM AG

## Description

L'invention est relative au dispositif de liaison entre deux véhicules successifs – ferroviaires ou routiers où la circulation est rendue possible grâce à l'utilisation de soufflets ou de passerelles étanches aux intempéries et au bruit. Elle concerne un dispositif déformable dont le but est de permettre les déformations, en niveau et en gauchissement, entre les planchers des véhicules successifs et est plus particulièrement intéressante lorsque le nombre des véhicules reliés est supérieur à deux, car nombre de solutions de l'art antérieur ne sont pas applicables à cette configuration.

Généralement, la liaison entre les différentes caisses de véhicules – en particulier dans le cas des tramways – est assurée par tourillonnement autour d'un axe vertical d'une sorte de tourelle d'intercirculation, dans laquelle les parois cylindriques, le plafond relativement plan et le plancher horizontal assurent la continuité matérielle des parois, par rotation autour d'un axe perpendiculaire au plancher de chacun des véhicules liés, le tourillonnement d'un plancher par rapport à celui du compartiment d'intercirculation se faisant le long de deux arcs de cercle glissant l'un sur l'autre.

Le brevet FR-A 2 357 409 décrit un mode intéressant de réalisation d'une telle cinématique: les deux moitiés du compartiment d'intercirculation sont reliées entre elles par un axe horizontal, situé à proximité du plancher, ce qui permet d'assurer la continuité matérielle des planchers d'un véhicule à l'autre par une charnière voisine de cet axe transversal qui est, préférentiellement, disposé sur la traverse de charge d'un bogie médian. Il en résulte une liaison, du type "à la cardan", par trois axes perpendiculaires entres les véhicules. La torsion en roulis doit, alors, être absorbée par les suspensions des bogies extrêmes, en cas de gauche de voie. Ce dispositif présente l'inconvénient de ne pas être applicable, pour des raisons mécaniques, à un train formé de plus de deux caisses qui parcourt les gauches et inflexions de voies urbaines ou montagneuses, par exemple.

Le brevet EP-A 0 134 202 décrit un autre mode de réalisation du compartiment d'intercirculation lorsque les chassis des véhicules consécutifs n'ont qu'un seul point commun, assuré par une rotule; le compartiment d'intercirculation, matérialisé par deux planchers semi-circulaires prend alors orientation par un dispositif bissecteur de l'angle entre les deux caisses. Ces deux planchers du compartiment d'intercirculation permettent les gauchissements entre les planchers des différents véhicules, même si leur nombre est supérieur à deux, à condition que les planchers du compartiment d'intercirculation soient reliés par un plancher élastiquement déformable, qui n'est pas décrit dans le document cité.

Dans le brevet EP-A 0 181 294, de FIAT, le gauchissement d'un plancher rigide est permis par un axe de fixation diagonal. Le brevet FR-A 2 573 714, de FAIVELEY propose un plancher déformable, soutenu par des barres transversales, fixées à des moyens tels que des parallélogrammes articulés. Un tel plancher, devant suivre les énormes débattements – notamment en cisaillement – entre les véhicules auxquels il est fixé par ses extrémités, doit être très souple et, essentiellement, supporté par des barres traversantes, enfilées à travers des alvéoles qui en permettent la déformation.

Le brevet DE-C 966 430 décrit un plancher d'intercirculation, directement en appui glissant sur les extrémités des planchers des véhicules, comportant un élément constitué de caoutchouc renforcé de plaquettes métalliques, dont la portance est assurée par des équerres prolongeant lesdits planchers et par un appui médian sur l'attelage.

L'analyse de l'art antérieur montre, à l'évidence, le besoin d'un plancher pour compartiment d'intercirculation entre véhicules ferroviaires ou routiers qui puisse supporter des charges tout en étant continu et qui soit susceptible d'assurer les déformations éventuelles de dénivellation, de gauchissement entre plans et de petites déformations élastiques des dispositifs de liaison entre véhicules. En raison de l'évolution des technologies, il apparait également nécessaire que ce type de plancher déformable pour compartiment d'intercirculation mette en œuvre des principes de fonctionnement qui le rende utilisable à des trains constitués de plus de deux véhicules.

L'invention a donc pour objectif de proposer un moyen de réalisation d'un tel dispositif déformable, assurant une liaison continue avec les planchers des véhicules placés de part et d'autre du compartiment d'intercirculation, capable de permettre les déformations de niveau et de gauchissement et ce quel que soit le nombre des véhicules reliés.

L'invention consiste en un plancher d'intercirculation déformable constitué de pièces à base de compositions élastomériques, ledit plancher d'intercirculation étant destiné à assurer la continuité de passage entre deux véhicules ferroviaires ou routiers successifs constituant un élément d'un train, malgré les dénivellations, le ballant latéral et les gauchissements entre les planchers desdits véhicules.

Le plancher d'intercirculation déformable, objet de l'invention, comprend un joint déformable assurant l'étanchéité aux poussières, aux bruits et aux intempéries, qui est monté entre les extrémités dudit plancher d'intercirculation déformable et les planchers des demi-compartiments d'intercirculation et un élément autoporteur, déformable par gauchissement, dans lequel la résistance aux charges est assurée du fait de l'écartement de deux nappes de renforcement, noyées au sein d'une composition élastomérique; ledit élément autoporteur repose sur deux lignes d'appui continues, montées sur des éléments déformables en cisaillement, ces derniers étant fixés aux planchers des demis compartiments d'intercirculation.

La résistance à la flexion, entre les deux lignes d'appui initialement parallèles, du plancher d'intercirculation déformable, objet de l'invention, est due à l'effet poutre des deux nappes de renforcement, réalisées en cables continus, textiles ou métalliques, qui sont maintenues écartées, dans le sens vertical, par la composition élastomérique formant entretoise, par essence capable de gauchissements – même importants – entre les lignes d'appui rigides sur les planchers des demi-compartiments d'intercirculation.

Une élasticité longitudinale aux petites déformations est apportée par l'apppui d'une telle poutre sur ses deux lignes d'appui continues, déformables en cisaillement, tout en assurant une rigidité élevée sous des charges verticales.

Les caractéristiques et variantes de l'invention seront mieux comprises à la lecture de la description accompagnant les dessins dans lesquels,

– la figure 1 représente une vue de dessous de l'ensemble d'une réalisation par assemblage mécanique du plancher d'intercirculation déformable disposé entre deux lignes d'appui rigides sur appuis discontinus,

– la figure 2 est une coupe longitudinale donnant la section droite de la variante du plancher d'intercirculation déformable conforme à la figure 1,

– la figure 3 illustre une autre réalisation du joint déformable, dans la configuration des figures 1 et 2, dans laquelle l'étanchéité, assurée par glissement, permet la séparation aisée entre les véhicules,

– la figure 4 montre une vue de dessus, schématisée, d'une variante de réalisation, monobloc, du plancher d'intercirculation déformable, mettant en évidence la disposition des nappes de renforcement,

– la figure 5 est une coupe longitudinale de la section droite du plancher d'intercirculation déformable, dans la variante illustrée sur la figure 4,

– la figure 6 schématise la déformation du plancher d'intercirculation en cas de choc accidentel, provoquant les déformations extrêmes des moyens d'attelage entre caisses.

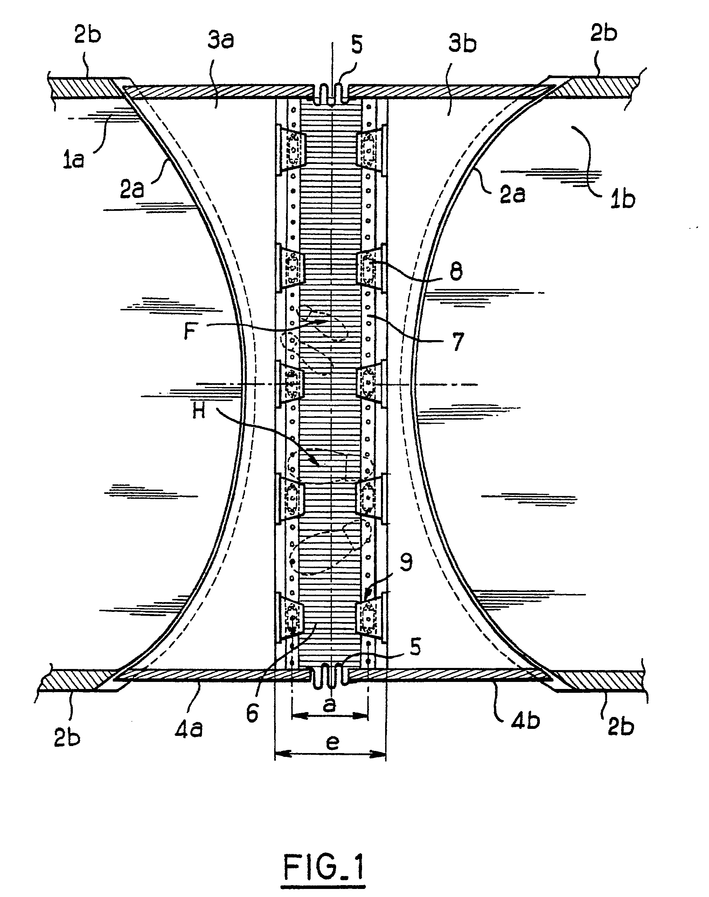

La figure 1 est un schéma d'ensemble du plancher d'intercirculation déformable, réalisé par assemblage mécanique d'éléments constitutifs et représenté vue du dessous.

Entre les véhicules (1a) et (1b) – dont seules les extrémités des planchers (2a) et des parois latérales (2b) sont représentées – tourillonnent les deux moitiés (3a) et (3b) d'un compartiment d'intercirculation, chacune étant solidaire de parois latérales (4a) et (4b) dudit compartiment d'intercirculation, rendues étanches par des moyens connus (non représentés) d'une part avec les parois latérales (2b) des véhicules (1a) et (1b) et, d'autre part, entre elles par une paroi déformable connue (5), telle qu'un soufflet.

L'élément autoporteur (6) est disposé entre les planchers rigides des demi-compartiments d'intercirculation (3a) et (3b). Sa largeur (a), normalement constante, autorise néanmoins les petits débattements élastiques de l'attelage qui ont pour effet de faire varier de quelques millimètres par exemple, plus ou moins 15 millimètres, en service normal l'écartement (e) des bords des planchers des demi-compartiments d'intercirculation (3a) et (3b).

Pour ce faire, les deux bords de l'élément autoporteur (6) sont boulonnés et bridés par une barre rigide (7), métallique par exemple, et sont en appui sur des supports élastiques (8) – qui peuvent être réalisés par un assemblage approprié, du type sandwich, de caoutchouc et de métal –, représentés, à titre d'exemple non limitatif, au nombre de cinq. Lesdits supports élastiques (8) sont conçus pour présenter une déformabilité de l'ordre de 1 à 2 millimètres, au maximum, dans le sens vertical, de manière à supporter les charges passant sur le plancher d'intercirculation. Ils présentent, dans les directions transversale et, surtout, longitudinale du véhicule, une faible rigidité (c'est-à-dire une réaction ne dépassant pas 15 daN) qui permet les débattements nécessaires à faible contrainte en cisaillement du caoutchouc, ledit cisaillement étant voisin de la moitié de l'épaisseur lesdits supports élastiques.

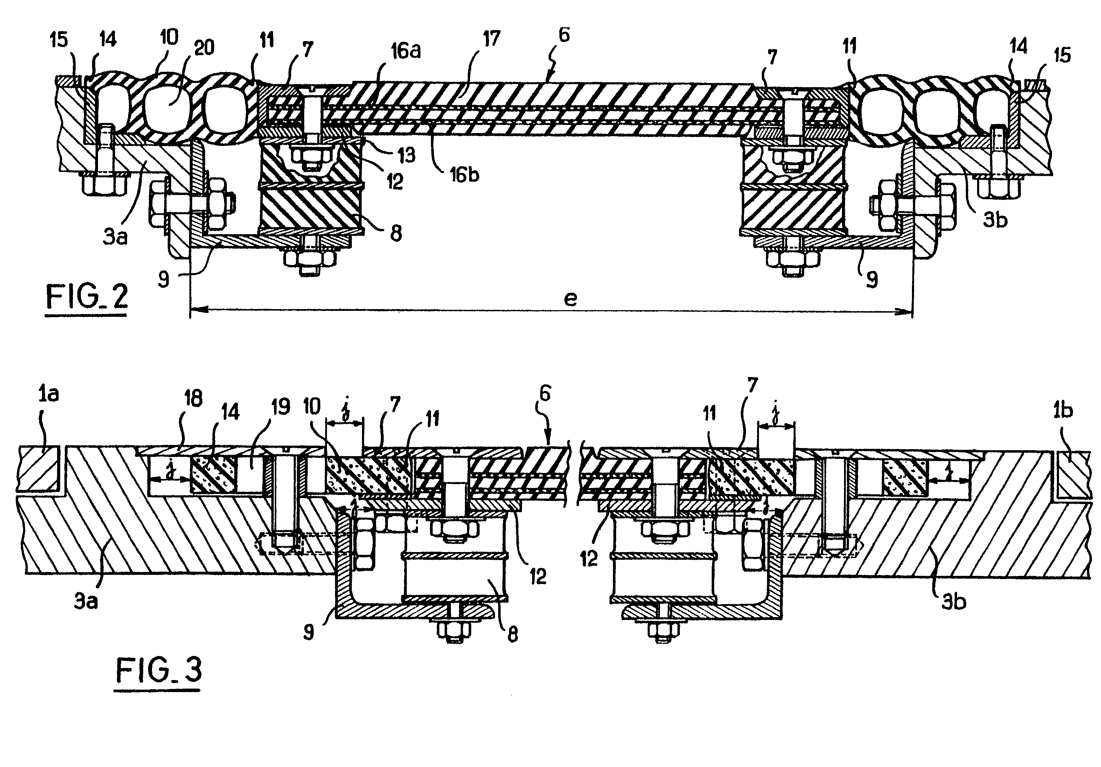

Les supports élastiques (8) sont portés par des cornières (9) fixées aux extrémités internes du plancher des deux demi-compartiments d'intercirculation (3a) et (3b). Lesdites cornières (9) ont été représentées discontinues mais il est évident pour l'homme de l'art que la même fonction serait remplie, de manière analogue, par des cornières continues sur toute la section transversale (telles que celles représentées sur la figure 2).

Les silhouettes des pieds des passagers, les plus grands (H) et les plus petits (F) envisageables, représentées en trait discontinu, donnent l'échelle du dispositif.

La figure 2 est une section du plancher d'intercirculation déformable par l'axe longitudinal des véhicules ou, plus exactement, par l'axe longitudinal du compartiment d'intercirculation même si les deux véhicules ne sont plus alignés comme celà se produit lors du parcours d'une portion de voie en courbe.

Cette coupe montre comment une étanchéité aux bruits, à l'air et aux intempéries peut être assurée par un joint déformable (10), réalisé par un profilé en caoutchouc rapporté ou par moulage en plusieurs parties, juxtaposées sur toute la largeur du compartiment et comportant des alvéoles (20).

L'extrémité (11) du joint déformable (10), située du côté de l'élément autoporteur (6), et qui doit rester en appui avec lui, sera avantageusement fixée par adhérisation à la barre rigide de brigade (7) dont le boulonnage enserre l'extrémité – de préférence décortiquée, c'est-à-dire dont le revêtement en caoutchouc a été éliminé jusqu'à proximité des nappes de renforcement (16a) et (16b) – de l'élément autoporteur (6).

Des contreplaques (12) servent à pincer ledit élément autoporteur (6), par un boulonnage (ou un rivetage) dont certains boulons (ou rivets) permettent également la fixation des armatures supérieures (13) des supports élastiques (8).

Lesdits supports élastiques (8) seront avantageusement – mais non obligatoirement – choisis de section rectangulaire, ce qui autorise une souplesse dans le sens de l'écartement (e) des faces verticales des planchers des demi-compartiments d'intercirculation (3a) et (3b) supérieure à la souplesse dans le sens perpendiculaire. Les déplacements dans cette dernière direction correspondent à des mouvements parasites entre les deux demi-compartiments d'intercirculation (3a) et (3b), dûs aux seuls frottements des axes prévus pour tourillonner sur les planchers des véhicules, ce qui a été démontré expérimentalement lors des essais sur les premiers prototypes.

Les supports élastiques (8), qui doivent en permanence subir les petites sollicitations modifiant l'écartement (e) des faces verticales des planchers des demi-compartiments d'intercirculation (3a) et (3b) seront préférentiellement réalisés, pour leur partie élastique, dans une composition élastomérique dont la formulation, par le choix de l'élastomère – tel que, à titre d'exemple non limitatif, du caoutchouc naturel et/ou par la nature des adjuvants incorporés à l'élastomère, assurera une bonne résistance à la fatigue dynamique donc une grande durée de vie.

Les extrémités (14) du joint déformable (10), situées du côté des véhicules, de part et d'autre du compartiment d'intercirculation, sont fixées de façon positive, par exemple par boulonnage d'un insert métallique (15), sur les extrémités des planchers des demi-compartiments d'intercirculation (3a) et (3b).

Les charges exercées sur la face supérieure du joint déformable (10) peuvent être supportées par un contact glissant sur la cornière d'appui (9), comme représenté, ou encore sur les planchers des demi-compartiments (3a) et (3b), amincis dans cette zone.

L'élément (6), au contraire, est par essence autoporteur grâce au moment de flexion entre les appuis rigides constitués par les barres de brigade (7), à chacune de ses extrémités, et à la raideur longitudinale des deux nappes de renforcement (16a) et (16b), pratiquement égale à celle des fils qui les composent, lesdites nappes de renforcement (16a) et (16b) étant maintenues écartées par leur liaison intime, obtenue au cours de l'opération de vulcanisation, avec la composition élastomérique (17).

Les nappes de renforcement (16a) et (16b) peuvent être constituées par des cables continus, parallèles, métalliques ou textiles de haut module, – c'est-à-dire dont le module de traction est au moins égal à 65 GPa –, et, en particulier, par des cables de polyamide aromatique, des fibres de verre ou de carbone ou encore des fibres de polyéthylène ou de polypropylène.

La composition élastomérique (17) pourra, avantageusement, recevoir une formulation appropriée qui, par le choix de l'élastomère tel qu'un polymère contenant dans sa chaîne moléculaire des atomes d'halogène par exemple du polychloroprène, du chlorobutyl ou du bromobutyl- et/ou par la nature des adjuvants incorporés à l'élastomère, lui conférera une bonne résistance au feu et évitera l'émission de gaz ou de vapeurs toxiques en cas de contact avec une flamme.

Le joint déformable (10), assurant l'étanchéité du dispositif, pourra, pour les mêmes raisons de sécurité, être réalisé dans une composition élastomérique identique ou différente mais présentant des caractéristiques semblables.

La figure 3 illustre une variante du plancher d'intercirculation déformable, objet de l'invention qui présente l'avantage de faciliter le désaccouplement des véhicules (1a) et (1b) lorsque le joint déformable (10) – représenté, à titre d'exemple non limitatif, réalisé dans un matériau cellulaire –, solidarisé, par exemple à ses extrémités (11) en contact avec l'élément autoporteur (6), par serrage entre les barres de brigade (7) et les contreplaques de pincement (12), se trouve en simple appui glissant sur les planchers des demi-compartiments d'intercirculation (3a) et (3b), dans une zone amincie.

L'étanchéité est alors assurée par recouvrement des extrémités (14) du joint déformable (10) par des profilés (18), par exemple réalisés en métal ou alliage léger, tel que de l'aluminium, fixés aux planchers des demi-compartiments d'intercirculation (3a) et (3b), à travers des boutonnières (19) ménagées dans le joint déformable (10).

Lorsque tous les jeux mécaniques (j), entre le joint déformable (10) et les planchers des demi-compartiments d'intercirculation (3a) et (3b) ainsi qu'entre les supports élastiques (8) et les contreplaques de pincement (12) venant au contact des cornières (9) sont absorbés en raison de débattements accidentels, l'élément autoporteur (6) peut, grâce à sa conception, se comprimer sous la forme d'un bombement.

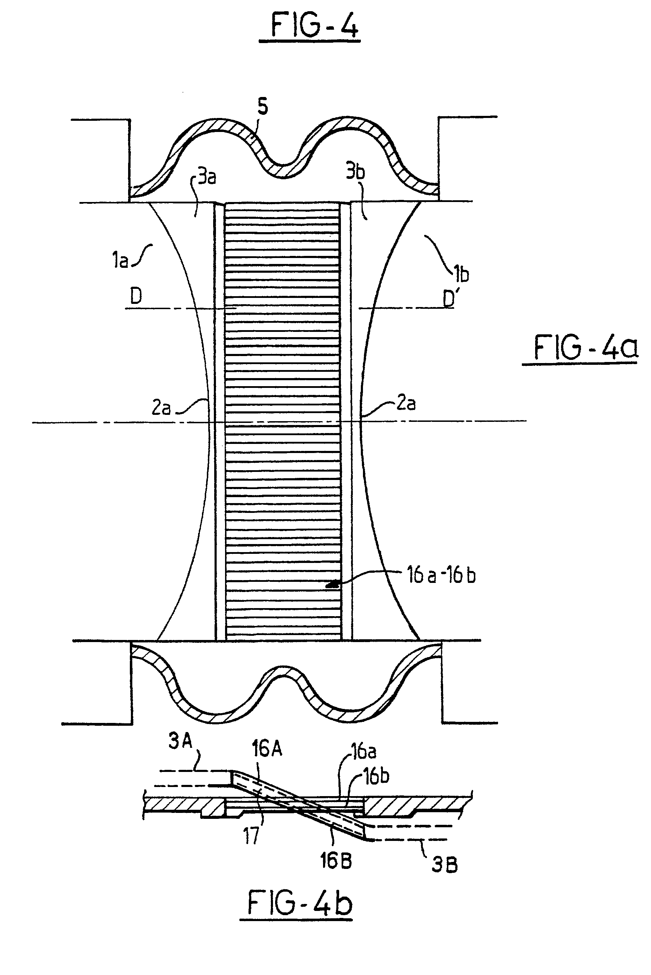

La figure 4 montre une vue de dessus, schématisée, d'une variante de réalisation monobloc du plancher d'intercirculation déformable.

La vue 4a présente la variante du plancher d'intercirculation déformable reliant les extrémités (2a) des planchers des véhicules (1a) et (1b), planchers sur lesquels tourillonnent des demi-planchers (3a) et (3b), éléments d'un compartiment d'intercirculation.

L'étanchéité aux intempéries est assurée par la membrane (5) jouant le rôle de parois latérales.

Les deux nappes de renforcement (16a) et (16b) sont disposées parallèlement à l'axe des véhicules, ou, lorsque lesdits véhicules sont en courbe, parallèlement à l'axe du solide formé par les demi-planchers (3a) et (3b) qui tourillonnent autour d'axes sensiblement verticaux. Grâce à des patins de glissement ou à des leviers auxiliaires, ces axes de rotation géométrique ne sont pas nécessairement matérialisés sur chaque véhicule mais sont assurés, par exemple, par des glissières courbes.

La vue 4b est une coupe selon DD' de la vue 4a qui permet de schématiser la rotation, provoquée par le vrillage, dû au roulis entre les véhicules, qui gauchit le plan vertical contenant les axes de rotation géométrique et, par conséquent, l'élément autoporteur qui relie les demi-planchers (3a) et (3b).

Les constituants représentés en traits continus correspondent à l'état de fonctionnement où les véhicules (1a) et (1b) sont alignés, ceux représentés en traits discontinus correspondant aux positions (3A) et (3B) prises par les demi-planchers (3a) et (3b) lors du vrillage, lesdits demi-planchers entrainant les cables des nappes de renforcement à tourner en position (16A) et (16B) par déformation de la composition élastomérique (17) dans laquelle lesdites nappes sont noyées.

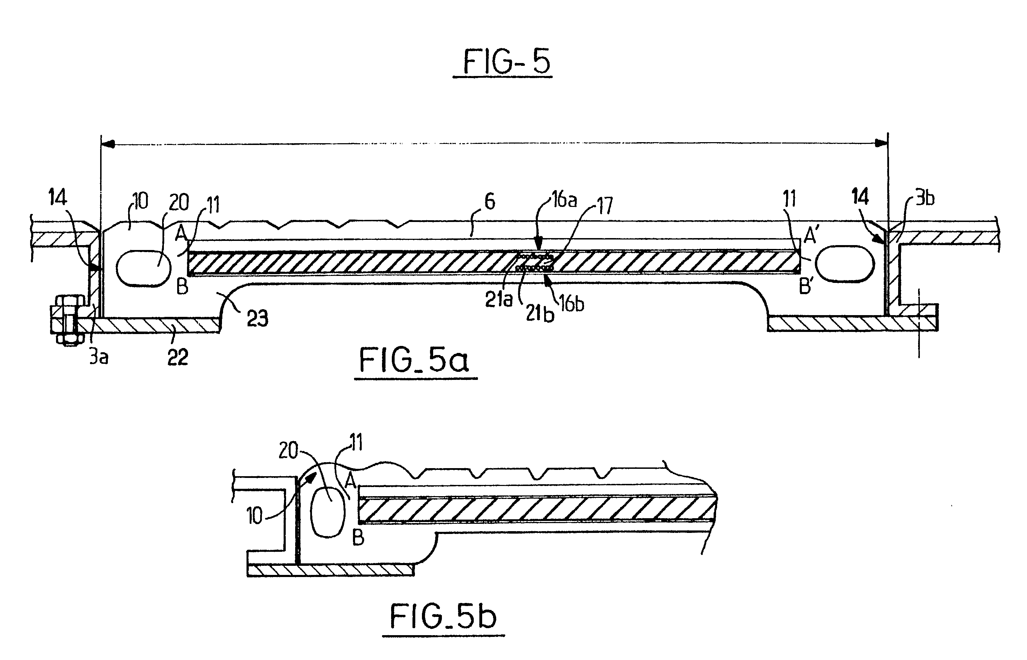

La figure 5 est une coupe plus détaillée, de même disposition que la vue 4b, dans l'état de repos sur la vue 5a, et en légère compression sur la vue 5b.

Elle met en évidence les deux nappes de renforcement (16a) et (16b), maintenues écartées par la composition élastomérique (17).

Le rectangle AA'B'B matérialise une forme qui peut être confectionnée à partir des compositions élastomériques "crues", c'est-à-dire avant vulcanisation, à partir de nappes de cables textiles ou métalliques calandrées et superposées à des couches successives de la composition élastomérique (17), couches éventuellement alternées avec des nappes ou tissus (21a) et (21b) assurant la cohésion dans le sens transversal.

Le joint déformable (10), ici représenté – à titre d'exemple non limitatif – avec une seule alvéole (20) permettant les petites déformations représentées sur la vue 5b, est, en effet, réalisé au cours du moulage monobloc.

Les extrémités (11) de l'élément autoporteur (6) sont placées dans un moule contenant également les cornières ou simples plaques de fixation (22), qui ont, au préalable, reçu un traitement en permettant l'adhérence au support (23), continu dans les sens transversal et ainsi rendu solidaire de l'extrémité (11) de l'élément autoporteur (6) jusqu'à la paroi (14) du joint déformable (10).

La composition élastomérique constitutive du support continu (23), en liaison intime avec l'élément autoporteur (6), préconfectionné, de section AA'B'B, peut recevoir une formulation adaptée à une bonne résistance à la fatigue pour assurer la fonction de rattrappage des petites déformations dynamiques.

La composition élastomérique (17) de l'élément autoporteur (6) peut, elle, recevoir une formulation lui assurant une bonne résistance au feu.

La face supérieure de l'élément autoporteur (6) pourra, avantageusement, présenter les dessins destinés à l'antidérapage, usuels dans les planchers des métros, par exemple, et être réalisée dans une composition élastomérique résistant à l'usure superficielle grâce à ses propriétés anti-abrasion.

La pièce monobloc constituant le plancher d'intercirculation déformable peut être réalisée, en série, par moulage – sans nécessiter l'inconvénient de l'assemblage des pièces assurant les diverses fonctions –, lesdites fonctions étant remplies par des zones déterminées, à savoir:

– le support continu (23), de section constante, en appui sur la cornière ou plaque de fixation (22) assure la tenue à la fatigue dynamique par sa flexibilité en cisaillement horizontal lors des variations de la longueur (e) entre planchers des demi-compartiments d'intercirculation, variations qui seront, usuellement, de plus ou moins 15 millimètres, par exemple;

– l'alvéole (20) augmente le rôle de joint déformable lors des sollicitations, en assurant les étanchéités au bruit (lorsque le compartiment d'intercirculation est entièrement enfermé dans la membrane (5) comme représenté sur la figure 4) mais aussi aux intempéries et aux courants d'air, dans d'autre cas, ainsi qu'aux lavages d'entretien;

– lors des chocs accidentels, les extrémités (11) et (14) du joint déformable (10) viennent en contact, grâce à l'écrasement de l'alvéole (ou des alvéoles) (20), et les nappes de renforcement (16a) et (16b) venant en butée sur la composition élastomérique constitutive du joint (10) ont tendance à flamber, en prenant une forme en oméga, par rotation dans le support continu (23) autour d'un axe horizontal non matérialisé;

– la cohésion transversale, assurée par les nappes ou tissus (21a) et (21b), évite, lors de ces chocs, des déchirures de l'élément autoporteur (6).

– les petites déformations parasites transversales, dues aux frictions des planchers des demi-compartiments d'intercirculation (3a) et (3b) sur les planchers des véhicules où ils tourillonnent sont absorbées, de façon homogène, grâce à l'existence des tissus ou nappes (21a) et (21b), par le cisaillement transversal du support continu (23), même si les charges, constituées par les passagers, leurs bagages, ou les roues de véhicules dans des navettes de transport des voitures ne sont pas réparties transversalement;

– la continuité de la face inférieure du plancher d'intercirculation déformable, adhérisé aux plaques de fixation (22), sans pièce dépassant dudit plancher, permet de gagner sur l'encombrement en hauteur pour rapprocher le niveau du plancher d'intercirculation déformable et l'attelage et sera appréciée, en particulier en cas d'utilisation par des navettes permettant le transport des voitures sur deux étages;

– la tenue au feu des compositions élastomériques, placées en plafond dans ce cas, sera essentielle, même si une couche continue de protection doit être ajoutée pour recouvrir la composition élastomérique de meilleure tenue à la fatigue dynamique qui constitue le support continu (23). Facultativement, la composition élastomérique de cette couche superficielle pourra recevoir une formulation adaptée pour présenter une couleur, claire ou non, appropriée au plafond.

En résumé, la variante du plancher d'intercirculation déformable (illustrée sur les figures 4 et 5) apporte une possibilité de fabrication industrielle en un seul tenant qui évite les opérations d'assemblage de pièces différentes, pour remplir un ensemble de fonctions identiques.

Il ajoute l'intérêt de réduction de l'encombrement, entraînant une faible dénivellation par rapport aux planchers des véhicules, ce qui sera opportun, particulièrement, pour les rames à deux étages.

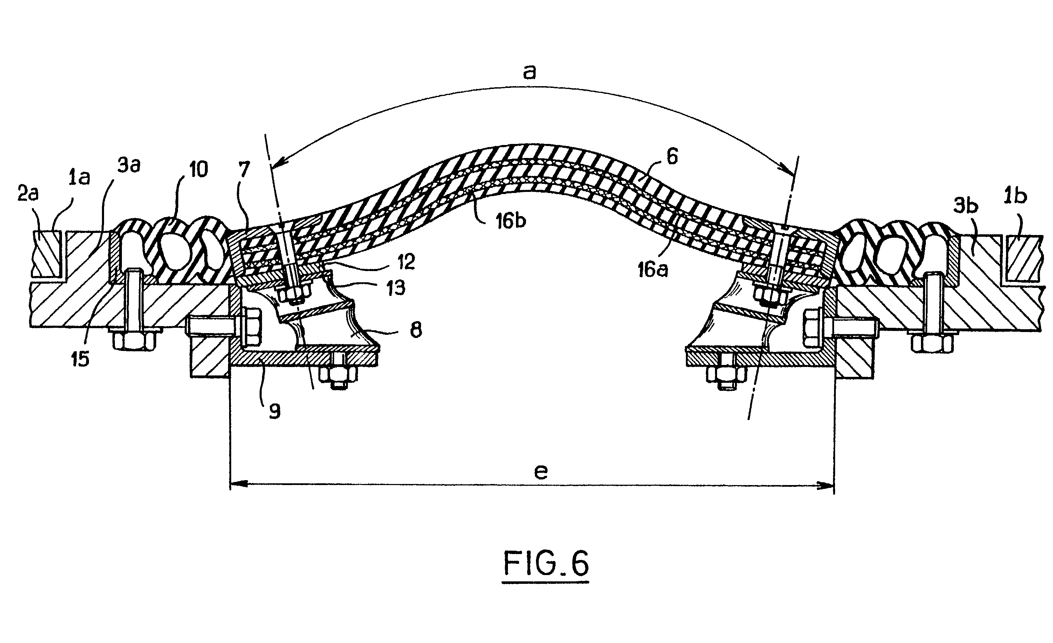

La figure 6 schématise le comportement de l'élément autoporteur (6), illustré dans la variante réalisée par assemblage mécanique, dans les circonstances de choc accidentel, provoquant des déformations extrêmes des moyens d'attelage entre caisses, juste avant que des déformations mécaniques ne se produisent dans les planchers (2a) et dans les parois (2b) (non représentées) des véhicules (1a) et (1b) venus en contact.

L'élément autoporteur (6) se comprime par une mise en forme d'oméga des nappes de renforcement (16a) et (16b) qui restent parallèles entre elles. Cette mise en forme d'oméga est sans danger et non destructrice pour l'élément autoporteur (6). Elle se traduit par un simple bombement dudit élément autoporteur (6), sous les pieds des passagers, les voyageurs étant, par ailleurs, bousculés lors de la compression accidentelle des attelages.

Le cisaillement maximal des supports élastiques (8), ainsi que l'entrée en contact de leurs armatures supérieures (13) et des contreplaques de pincement (12) avec les bords des planchers des demi-compartiments (3a) et (3b) ou des cornières (9) qui leur sont fixées provoque déjà un couple de flexion dirigé vers le haut de l'élément autoporteur (6).

L'effet poutre entre les nappes de renforcement (16a) et (16b) retarde la déformation dudit élément autoporteur (6). Après l'entrée en contact de ces pièces, il se produit un flambage des deux nappes de renforcement (16a) et (16b) — flambage qui a lieu dans le même sens pour les deux nappes — dont les extrémités viennent buter sur les barres de bridage (7), solidaires du joint déformable (10) lui-même comprimé à son maximum.

La rotation, autour d'un axe horizontal, de l'ensemble rigide formé des barres de bridage (7), des contreplaques de pincement (12) et des armatures supérieures (13) des supports élastiques (8), est rendue possible par la souplesse desdits supports élastiques (8).

Cette rotation permet, en service normal, des dénivellations de plusieurs centimètres entre les planchers (2a) des véhicules (1a) et (1b) et, par conséquent, entre les deux planchers des demi-compartiments d'intercirculation (3a) et (3b) qui suivent leurs débattements mais restent alignés sur l'axe passant par les deux centres de tourillonnement.

Un comportement analogue serait observé avec la variante de réalisation monobloc du plancher d'intercirculation déformable, illustrée sur les figures 4 et 5, l'absorption de la déformation se faisant par cisaillement du support continu (23), limité par la mise en contact des parois (11) et (14) du joint déformable (10).

Par ailleurs, dans un cas comme dans l'autre, les dénivellations peuvent être différentes aux bords droit et gauche des véhicules (1a) et (1b), si la cinématique des demi-compartiments d'intercirculation (3a) et (3b) se produit avec un angle de roulis entre les planchers, la structure de l'élément autoporteur (6) admettant un vrillage des nappes de renforcement (16a) et (16b), sans contraintes notables.

Pour satisfaire à la déformation illustrée sur la figure 6, les constituants des nappes de renforcement (16a) et (16b) seront avantageusement choisis parmi des matériaux présentant un module élevé, peu différent du module des fils constitutifs, et une faible torsion soit, à titre d'exemple non limitatif, à base de fils de polyamide aromatique, de fils de polyéthylène, de polypropylène, de fibres de carbone ou de verre, ou encore de cables métalliques peu toronnés, appelés cables frettés.

La description et les figures précédentes se rapportent au cas d'un compartiment d'intercirculation formé de deux moitiés identiques.

L'invention s'appliquerait, de la même manière, au cas d'un compartiment d'intercirculation formé de trois éléments ou plus, l'élément médian, étant, par exemple, supporté par un point milieu de l'attelage entre deux voitures consécutives et disposé entre deux planchers d'intercirculation déformables réalisés conformément à l'invention.

De même, l'invention s'applique au cas d'une rame articulée dont les extrémités seraient en appui sur un bogie ou un essieu simple commun.

Enfin, l'invention serait transposable, par le choix des dimensions et la sélection d'éléments de renforcement appropriés, aux compartiments d'intercirculation de véhicules transportant des automobiles ou d'autres moyens de transport terrestre.

En outre, ce dispositif sera intéressant dans des autobus articulés ou des passerelles d'accès à des avions ou à des navires où de faibles mouvements dynamiques doivent être absorbés.

La description et les figures qui précèdent permettent de mettre en évidence les caractéristiques et les avantages du dispositif de plancher d'intercirculation déformable, objet de l'invention, et de ses variantes qui:

— présentent un élément autoporteur, grâce à la structure permettant un effet poutre entre deux lignes d'appui;

— sont rendus étanches aux bruits et aux intempéries par l'insertion d'un joint déformable aux extrémités voisines des véhicules de part et d'autre du compartiment d'intercirculation;

— absorbent les dénivellations et les gauchissements entre les planchers des véhicules successifs grâce à la souplesse du dispositif de liaison au plancher des demi-compartiments d'intercirculation desdits véhicules;

— acceptent des dénivellations différentes entre les bords droit et gauche des véhicules successifs par la possibilité de vrillage des nappes de renforcement, ce qui les rend utilisables sur des trains composés d'un nombre de véhicules supérieur à deux;

— résistent aux chocs accidentels, par déformation en oméga des nappes de renforcement ne provoquant qu'un simple bombement dudit plancher d'intercirculation déformable;

— peuvent présenter des caractéristiques antifeu grâce à la formulation des compositions élastomériques constituant l'élément autoporteur et le joint déformable.

— présentent une grande durée de vie sous les sollicitations dynamiques rencontrées en service, grâce à la formulation de la composition élastomériques utilisée dans les supports élastiques qui portent ledit plancher ou dans les supports continus de liaison.

L'homme de l'art peut, bien entendu, apporter au plancher d'intercirculation déformable, destiné à assurer la continuité de passage entre deux véhicules successifs ferroviaires ou routiers, objet de l'invention, et à ses variantes illustrées sur les figures, diverses modifications sans sortir du cadre de l'invention.

**Revendications**

1. Plancher d'intercirculation, destiné à assurer la continuité de passage entre deux véhicules successifs ferroviaires ou routiers munis de demi-compartiments d'intercirculation pivotants, malgré les dénivellations, le ballant latéral et le gauchissement entre les planchers desdits demi-compartiments d'intercirculation, comportant un élément autoporteur (6), déformable par gauchissement, caractérisé en ce qu'il comprend un joint déformable (10) assurant l'étanchéité aux poussières aux bruits et aux intempéries, qui est monté entre les extrémités dudit plancher d'intercirculation et les planchers des demi-compartiments d'intercirculation des véhicules, en ce que ledit élément autoporteur (6) est constitué d'une composition élastomérique (17) renforcée par au moins une paire de nappes de cables continus, métalliques ou textiles (16a et 16b), et en ce que ledit élément autoporteur (6) repose sur deux lignes d'appui continues (7), montées sur des éléments (8 ou 23), déformables en cisaillement, ces derniers étant fixés aux planchers des demi-compartiments d'intercirculation.

2. Plancher d'intercirculation selon la revendication 1, caractérisé en ce que la fixation aux planchers des demi-compartiments d'intercirculation est assurée par des supports élastiques (8), discontinus, à capacité de cisaillement voisine de la moitié de l'épaisseur desdits supports, dans le sens longitudinal du véhicule, lesdits supports élastiques reliant par des moyens mécaniques tels que boulons ou rivets les lignes d'appui continues constituées par des barres rigides de bridage (7) et leurs contreplaques (12) aux cornières support (9).

3. Plancher d'intercirculation selon la revendication 2, caractérisé en ce que les supports élastiques (8) sont des sandwiches de caoutchouc adhérisé à des armatures métalliques.

4. Procédé de réalisation d'un plancher d'intercirculation conforme à la revendication 1, caractérisé en ce que la fabrication est opérée, d'un seul tenant, par la vulcanisation simultanée des composants assumant les différentes fonctions, la fixation aux planchers des véhicules étant assurée par des plaques de fixation (22), adhérisées au cours de la vulcanisation aux supports continus (23) qui constituent les lignes d'appui.

5. Plancher d'intercirculation selon l'une des revendications 1 ou 2, caractérisé en ce que le joint déformable (10) comporte au moins une alvéole (20) qui se présente transversalement au sens du véhicule, après mise en place.

6. Plancher d'intercirculation selon l'une des revendications 1 ou 2, caractérisé en ce que le joint déformable (10) est constitué d'un matériau cellulaire.

7. Plancher d'intercirculation selon l'une des revendications 1 ou 2 ou 5 ou 6, caractérisé en ce que le joint déformable (10) et l'élément autoporteur (6) sont réalisés dans une composition élastomérique à laquelle sa formulation confère une bonne résistance au feu.

8. Plancher d'intercirculation selon l'une des revendications 1 ou 2, caractérisé en ce que les nappes de renforcement (16a et 16b) de l'élément autoporteur (6) sont constituées de cables métalliques continus, parallèles, à faible taux de torsion, de manière à assurer une déformation aussi faible que possible sous l'effet de la charge ou des moments de flexion.

9. Plancher d'intercirculation selon l'une des revendications 1 ou 2, caractérisé en ce que les nappes de renforcement (16a et 16b) de l'élément autoporteur (6) sont constituées de cables continus de textile dont le module est supérieur à 65 GPa, tels que des fibres de polyamides aromatiques, des fibres de verre, des fibres de carbone, des fibres de polyéthylène ou de polypropylène.

**Claims**

1. Interconnecting floor intended to provide a continuous passage between two successive railway or road vehicles equipped with pivoting interconnecting half-compartments, despite variations in level, lateral swing and bending between the floors of the said interconnecting half-compartments, comprising a self-supporting element (6) deformable by bending, characterised in that it comprises a deformable joint (10) ensuring sealing against dust, noise and bad weather, which is mounted between the ends of the said connecting floor and the floors of the interconnecting half-compartments of the vehicles, in that the said self-supporting element (6) is formed from an elastomeric composition (17) reinforced by at least one pair of continuous layers of metal or textile cords (16a and 16b), and in that the said self-supporting element (6) rests on two continuous support lines (7) mounted on elements (8) which are deformable under shear stress, these latter being secured to the floors of the interconnecting half-compartments.

2. Interconnecting floor according to claim 1, characterised in that the fastening to the floors of the interconnecting half-compartments is effected by discontinuous elastic supports (8), with a shear capacity close to half the thickness of the said supports in the longitudinal direction of the vehicle, the said elastic supports connecting the continuous support lines formed by rigid clamping bars (7) and their counterplates (12) to the supporting angle members (9), by mechanical means such as bolts or rivets.

3. Interconnecting floor according to claim 2, characterised in that the elastic supports (8) are sandwiches of rubber bonded to metal reinforcements.

4. Method of making an interconnecting floor according to claim 1, characterised in that the production is carried out, in a single operation, by the simultaneous vulcanisation of the parts assuming the different functions, the fastening to the floors of the vehicles being effected by means of fastening plates (22) bonded during the vulcanising operation to the continuous supports (23) which constitute the support lines.

5. Interconnecting floor according to one of claims 1 or 2, characterised in that the deformable joint (10) comprises at least one cavity (20) which is apparent transversely to the direction of the vehicle, after being installed in position.

6. Interconnecting floor according to one of claims 1 or 2, characterised in that the deformable joint (10) is formed of a cellular material.

7. Interconnecting floor according to one of claims 1 or 2 or 5 or 6, characterised in that the deformable joint (10) and the self-supporting element (6) are produced from an elastomeric composition the formulation of which imparts to it a good fire-resistance.

8. Interconnecting floor according to one of claims 1 or 2, characterised in that the reinforcing layers (16a and 16b) of the self-supporting element (6) are formed by continuous parallel metal cords having a low degree of twist, in such a way as to ensure as low as possible a degree of deformation under the action of the load or of the bending moments.

9. Interconnecting floor according to one of claims 1 or 2, characterised in that the reinforcing layers (16a and 16b) of the self-supporting element (6) are formed by continuous textile cords to modulus of which exceeds 65 GPa, such as fibres of aromatic polyamides, glass fibres, carbon fibres, fibres of polyethylene or polypropylene.

**Patentansprüche**

1. Verbindungsboden zur Gewährleistung des unterbrechungsfreien Durchgangs zwischen zwei aufeinanderfolgenden Eisenbahn- oder Straßenfahrzeugen, die mit schwenkbaren Verbindungshalbabteilen ausgerüstet sind, trotz der Höhenunterschiede, der seitlichen Schwingungen und der Verwindungen zwischen den Böden dieser Verbindungshalbabteile, umfassend ein durch Verwindung verformbares selbsttragendes Element (6), dadurch gekennzeichnet, daß er eine verformbare Dichtung (10) umfaßt, die eine Abdichtung gegen Staub, Geräusche und Witterungseinflüsse gewährleistet und die zwischen den Enden des Verbindungsbodens und der Böden der Verbindungshalbabteile der Fahrzeuge angeordnet ist, daß das selbsttragende Element (6) aus einem mit mindestens zwei Lagen (16a, 16b) aus Metall- oder Textilkabeln verstärkten Elastomergemisch (17) besteht und daß das selbsttragende Element (6) auf zwei durchgehenden Stützlinien (7) aufliegt, die auf durch Scherkräfte verformbaren Elementen (8 oder 23) angeordnet sind, wobei letztere auf den Böden der Verbindungshalbteile befestigt sind.

2. Verbindungsboden nach Anspruch 1, dadurch gekennzeichnet, daß die Befestigung an den Böden der Verbindungshalbabteile durch unterbrochene elastische Abstützungen (8) gewährleistet ist, die Scherkräfte nahe der halben Dicke der Abstützungen in Längsrichtung des Fahrzeugs aufnehmen können, wobei diese elastischen Abstützungen die von starren Profilschienen (7) gebildeten durchgehenden Stützlinien und deren Gegenplatten (12) durch mechanische Mittel, wie Schrauben oder Nieten, mit Winkeleisen (9) verbinden.

3. Verbindungsboden nach Anspruch 2, dadurch gekennzeichnet, daß die elastischen Abstützungen (8) aus Kautschukschichten bestehen, die mit Metallverstärkungen verklebt sind.

4. Verfahren zur Herstellung eines Verbindungsbodens nach Anspruch 1, dadurch gekennzeichnet, daß die Herstellung in einem Stück durch gleichzeitige Vulkanisation der die verschiedenen Funktionen erfüllenden Bestandteile durchgeführt wird, wobei die Befestigung an den Böden der Fahrzeuge durch Befestigungsplatten (2) gewährleistet

ist, die bei der Vulkanisation mit die Stützlinien bildenden durchgehenden Abstützungen (23) verklebt werden.

5. Verbindungsboden nach Anspruch 1 oder 2, dadurch gekennzeichnet, daß die verformbare Dichtung (10) mindestens eine Luftkammer (20) aufweist, die im Einbauzustand in Querrichtung des Fahrzeugs verläuft.

6. Verbindungsboden nach Anspruch 1 oder 2, dadurch gekennzeichnet, daß die elastische Dichtung (10) aus einem zellenartigen Material besteht.

7. Verbindungsboden nach einem der Ansprüche 1, 2, 5 oder 6, dadurch gekennzeichnet, daß die elastische Dichtung (10) und das selbsttragende Element (6) aus einem feuerhemmenden Elastomergemisch bestehen.

8. Verbindungsboden nach Anspruch 1 oder 2, dadurch gekennzeichnet, daß die Verstärkungslagen (16a, 16b) des selbsttragenden Elements (6) aus parallelen Metallkabeln mit geringem Torsionsgrad bestehen, um unter dem Einfluß der Belastung oder der Biegemomente eine möglichst geringe Verformung zu gewährleisten.

9. Verbindungsboden nach Anspruch 1 oder 2, dadurch gekennzeichnet, daß die Verstärkungslagen (16a, 16b) des selbsttragenden Elements (6) aus durchgehenden Textilkabeln mit einem Modul von mehr als 65 GPa sowie aus aromatischen Polyamidfasern, Glasfasern, Carbonfasern, Polyethylenfasern oder Polypropylenfasern bestehen.

$$\underline{FIG.1}$$

FIG_2

FIG_3

## FIG-4

## FIG-4a

## FIG-4b

FIG-5

FIG.5a

FIG.5b

FIG.6